# EUROPEAN PATENT SPECIFICATION

(11) **EP 3 312 719 B1**
(45) Date of publication and mention of the grant of the patent: **28.10.2020**
(21) Application number: 15882455.7
(22) Date of filing: 18.11.2015
(51) Int. Cl.: G06F 9/451

(54) **METHOD AND DEVICE FOR IDENTIFYING JAVA WINDOW CONTROL**
VERFAHREN UND VORRICHTUNG ZUR IDENTIFIKATION VON JAVA-FENSTERSTEUERUNG
PROCÉDÉ ET DISPOSITIF POUR IDENTIFIER UNE COMMANDE DE FENÊTRE JAVA

(30) Priority: 21.07.2015 CN 201510428900
(43) Date of publication of application: 25.04.2018
(73) Proprietor: ZTE Corporation, Shenzhen, Guangdong 518057 (CN)
(72) Inventor: JIANG, Lei, Shenzhen Guangdong 518057 (CN); ZHANG, Jian, Shenzhen Guangdong 518057 (CN); PENG, Guangyao, Shenzhen Guangdong 518057 (CN); MEI, Yu, Shenzhen Guangdong 518057 (CN)
(74) Representative: Petraz, Gilberto Luigi
(86) International application number: PCT/CN2015/094910
(87) International publication number: WO 2016/131316

(56) References cited:
- CN-A- 103 049 493
- CN-A- 103 064 782
- CN-A- 103 064 782
- CN-A- 104 461 892
- CN-A- 104 462 979
- US-A1- 2003 001 854
- Hp: "HP UFT Add-ins Guide", , 1 December 2012 (2012-12-01), XP055475549, Retrieved from the Internet: URL:http://technodivine.com/downloads/Help -and-Guides/02-QTP/04-UTF-Documentation-11 .5/06-UFT_AddinsGuide.pdf [retrieved on 2018-05-16]

## Description

### Technical Field

This document relates to but is not limited to the field of computer technology, in particular to a method and device for identifying a java window control, and a computer-readable storage medium.

### Background

In a Windows operating system, most programs have windows, there are different controls such as input edit boxes and buttons on the windows, and these controls are generally called as heavyweight controls, each of which is essentially a window having a window handle capable of making a response to messages from a Windows mouse, a keyboard and the like.

Microsoft provides a utility spy++, which can accurately recognize a window control of a target program. However, for a window of a java program running on the Windows operating system, neither spy++ provided by Microsoft nor a window identification program written based on an API interface provided by Microsoft can effectively identify control information on a java window. The utility spy++ can only discover the java window but cannot identify controls because the controls on the java window are not Windows controls although the java window is a Windows window, i.e., they are not Windows windows, do not have window handles and essentially are controls drawn according to java draw primitives, i.e., lightweight controls, and responses to message events of mice, keyboards and the like of Windows are realized in java.

The features of the preamble of the independent claims are known from CN104462979A. Related technologies are known from US20030001854A1, Hp: "HP UFT Add-ins Guide", 1 December 2012 (2012-12-01) and CN103064782A. CN104462979A describes a system in which software is utilized to analyse a plurality of controls contained in a current window, a key control and position coordinates and a key attribute of the key control are screened out from the multiple controls and an input operation of the key attribute is automatically executed at the position coordinates. US20030001854A1 describes a mechanism for capturing one or more graphics primitives drawn to a user interface by an application in execution. A calling process invokes an injection component to inject a spy component into a target process. "HP UFT Add-ins Guide" describes the JAVA Add-in of HP tester. CN103064782A describes a method in which according to a Java reflex mechanism, obtaining a first basic control and a first sealing control which are on a current interface in a dynamic mode; traversing a second basic control in the first sealing control in a recursion mode, and enabling the first basic control and the second basic control to be used as a third basic control.

### Summary

The following is a summary of the subject described in detail in this text. This summary is not used for limiting the protection scope of the claims.

The embodiment of the present invention provides a method and device for identifying a java window control and a computer-readable storage medium according to appended independent claims, aiming at solving the problem that java window controls cannot be identified based on a Windows operating system. Further improvements and embodiments are provided in the dependent claims.

A method for identifying a java window control includes:
acquiring attribute information of all controls in a current java window, herein the attribute information of the controls includes position information of all controls;
acquiring position information of current location; and
determining a target control of the current location according to the position information of the current location and the position information of all controls.

In an exemplary embodiment, the step of acquiring the attribute information of all controls in a current java window includes:
acquiring draw primitives of all controls in the current java window from a current java process; and
acquiring the attribute information of the controls from the draw primitives.

In an exemplary embodiment, the attribute information of the controls further includes type information of the controls.

In an exemplary embodiment, the step of acquiring the position information of the current location includes:
acquiring position information of a position where a current mouse cursor is located.

In an exemplary embodiment, the step of determining a target control of the current location according to the position information of the current location and the position information of all controls includes:
determining a control with position information containing the position information of the current location in the position information of all controls as the target control corresponding to the current location.

In an exemplary embodiment, after the step of determining a target control corresponding to the current location, the method for identifying the java window further includes:
displaying the target control in a reminding manner and displaying attribute information of the target control.

In an exemplary embodiment, the target control is displayed in a highlight display manner or the target control is displayed in a coloring manner.

The embodiment of the present invention further provides a device for identifying a java window control, including:
an attribute acquisition module configured to acquire attribute information of all controls in a current java window, herein the attribute information of the controls includes position information of all controls;
a position acquisition module configured to acquire position information of current location; and
a location module configured to determine a target control of the current location according to the position information of the current location and the position information of all controls.

In an exemplary embodiment, the attribute acquisition module includes:
a first acquisition submodule configured to acquire draw primitives of all controls in the current java window from a current java process; and
a second acquisition submodule configured to acquire the attribute information of the controls from the draw primitives.

In an exemplary embodiment, the device further includes:
a reminding module configured to, after the location module determines the target control corresponding to of the current location, display the target control in a reminding manner and display attribute information of the target control.

The embodiment of the present invention further provides a computer-readable storage medium, storing program instructions, which, when executed by a processor, are capable of implementing the method for identifying a java window control provided by the embodiment of the present invention.

The above-mentioned solution of the present invention at least has the following beneficial effects:
In the method and device for identifying a java window control provided by the present invention, by determining the corresponding control in the java window according to the position information, the java window control can be effectively identified and displayed based on the Windows operating system, and a great convenience is provided for the operation based on the java process.

After the drawings and detailed description are read and understood, other aspects can be understood.

### Brief Description of Drawings

FIG. 1 illustrates a flowchart of a method for identifying a java window control according to an embodiment of the present invention.
FIG. 2 illustrates a structural schematic diagram of a device for identifying a java window control according to an embodiment of the present invention.
FIG. 3 illustrates a schematic view of a scenario according to an embodiment of the present invention.

### Detailed Description

In order to make the problem to be solved by the present invention, the solution and the advantages clearer, the present invention will be described below in detail with reference to the drawings in combination with the specific embodiments.

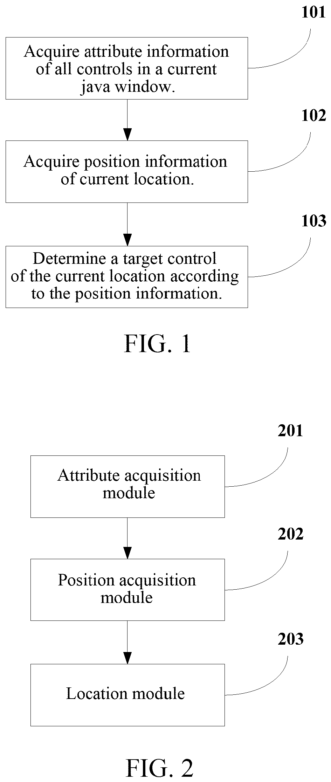

Referring to FIG. 1, an embodiment of the present invention provides a method for identifying a java window control. The method includes the following steps.

In step 101, attribute information of all controls in a current java window is acquired, herein the attribute information of the controls includes position information of all controls.

In the embodiment, step 101 may include:
acquiring draw primitives of all controls in the current java window from a current java process; and
acquiring the attribute information of the controls from the draw primitives.

In other words, an interception code is embedded into a java process to intercept draw primitives of all controls in the current java window, and the draw primitive includes a plurality of instructions for drawing the control; and then attribute information of each control is acquired from the relevant draw primitive.

In the embodiment, the attribute information may further include type information of the control. Herein, the type information may be a button, an edit input box or the like.

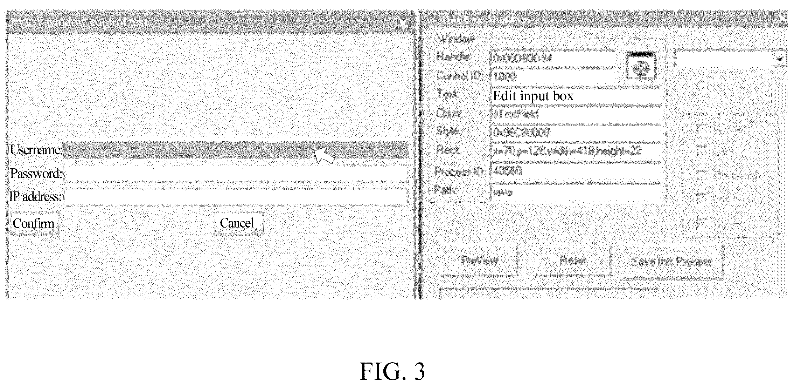

Referring to FIG. 3, as one embodiment of the present invention, controls in the current java window include: an edit input box corresponding to "Username", an edit input box corresponding to "Password", an edit input box corresponding to "IP address" and buttons "Confirm" and "Cancel". Firstly an interception code is embedded into a java process to acquire draw primitives of the controls, and attribute information of all controls is acquired from the draw primitive; and the attribute information includes position information of controls, type information of controls and the like. For example, as illustrated in FIG. 3, the position information of the edit input box corresponding to "Username" is as follow: a horizontal position coordinate of a left upper corner start point of the control is 10, a vertical position coordinate is 120, width of the control is 400 and height is 30; the position information of the edit input box corresponding to "Password" is as follow: a horizontal position coordinate of a left upper corner start point of the control is 10, a vertical position coordinate is 155, width of the control is 400 and height is 30.

Continuously referring to FIG. 1, in step 102, position information of current location is acquired.

Herein, step 102 includes: acquiring position information of a position where a current mouse cursor is located. Referring to FIG. 3, the position where the current mouse cursor is located is horizontal position x=70, vertical position y=128.

Continuously referring to FIG. 1, in step 103, a target control of the current location is determined according to the position information of the current location and the position information of all controls.

Herein, the position information of the current location is the position where the current mouse cursor is located, acquired in step 102.

Herein, step 103 includes: determining a target control corresponding to the current location according to the position information, including:
matching the position information of the current location with the position information of all controls, and when position information of a control contains the position information of the current location, determining the control as the target control.

From the position information of all controls acquired in step 101, a control with position information being the same as the position information of the current location acquired in step 102 is determined as the target control; and for example, in the java window as illustrated in FIG. 3, according to the acquired position information of all controls in the java window, it is determined that the position where the current mouse cursor is located is the position of the edit input box corresponding to "Username", i.e., the target control is determined to be the edit input box corresponding to "Username".

In the embodiment, after the step of determining the target control of the current location, the method for identifying the java window may further include: displaying the target control in a reminding manner and displaying attribute information of the target control at the same time. In the embodiment, the target control may be displayed in a highlight display manner or displayed in a coloring manner.

Referring to FIG. 3, a left window therein is a java window. When it is determined that the edit input box corresponding to "Username" is the target control, the target control is colored and the attribute information of the target control in a right window is displayed, herein the attribute information includes handle, control ID, text, class, etc.

In the method and device for identifying a java window control provided by the embodiment of the present invention, by determining the corresponding control in the java window according to the position information, the java window control can be effectively identified and displayed based on the Windows operating system, and a great convenience is provided for the operation based on the java process.

Referring to FIG. 2, the embodiment of the present invention further provides a device for identifying a java window control. The device includes:
an attribute acquisition module 201 configured to acquire attribute information of all controls in a current java window, herein the attribute information of the controls includes position information of all controls;
a position acquisition module 202 configured to acquire position information of current location; and
a location module 203 configured to determine a target control corresponding to the current location according to the position information of the current location and the position information of all controls.

Herein, the attribute acquisition module 201 includes:
a first acquisition submodule configured to acquire a draw primitives of all controls in the current java window from a current java process; and
a second acquisition submodule configured to acquire the attribute information of the controls from the draw primitives.

In the embodiment, the device may further include:
a reminding module configured to, after the location module 203 determines the target control corresponding to the current location, display the target control in a reminding manner and display attribute information of the target control.

The embodiment of the present invention further provides a computer-readable storage medium, storing program instructions, which, when executed by a processor, are capable of implementing the method for identifying a java window control provided by the embodiment of the present invention.

One skilled in the art can understand that all or partial steps in the above-mentioned embodiments may be implemented by using a computer program process, the computer program may be stored in a computer-readable storage medium, the computer program is executed on a corresponding hardware platform (e.g., a system, equipment, an apparatus or a device), and when being executed, it includes one or combinations of the steps of the method embodiments.

Alternatively, all or partial steps in the above-mentioned embodiments may also be implemented by using integrated circuits, and these steps may be respectively manufactured into integrated circuit modules, or more modules or steps thereof may be manufactured into a single integrated circuit module to implement.

Each device/function module/function unit in the above-mentioned embodiments may be implemented by adopting a general-purpose computing device, and they may be integrated on a single computing device and may also be distributed on a network consisting of multiple computing devices.

When each device/function module/function unit in the above-mentioned embodiments is implemented by means of software function module and is sold or used as an independent product, it may be stored in a computer-readable storage medium. The above-mentioned computer-readable storage medium may be a read-only memory, a magnetic disk, a compact disk or the like.

### Industrial Applicability

In the method and device for identifying a java window control provided by the present invention, by determining the corresponding control in the java window according to the position information, the java window control can be effectively identified and displayed based on the Windows operating system, and a great convenience is provided for the operation based on the java process.

## Claims

1. A method for identifying a java window control, comprising:
acquiring attribute information of all controls in a current java window (101), wherein the attribute information of the controls comprises position information of all controls;
acquiring position information of current location (102); and
determining a target control corresponding to the current location according to the position information of the current location and the position information of all controls (103),
wherein the step of acquiring attribute information of all controls in a current java window comprises:
acquiring draw primitives of all controls in the current java window from a current java process; and
acquiring the attribute information of the controls from the draw primitives,
wherein the step of acquiring position information of current location comprises:
acquiring position information of a position where a current mouse cursor is located.

2. The method for identifying the java window control according to claim 1, wherein the attribute information of the controls further comprises type information of the controls.

3. The method for identifying the java window control according to claim 1, wherein the step of determining a target control of the current location according to the position information of the current location and the position information of all controls comprises:
matching the position information of the current location with the position information of all controls, and when position information of a control contains the position information of the current location, determining the control as the target control of the current location.

4. The method for identifying the java window control according to claim 1, wherein, after the step of determining a target control corresponding to the current location, the method further comprises:
displaying the target control in a reminding manner and displaying attribute information of the target control,
wherein the step of displaying the target control in a reminding manner comprises:
displaying the target control in a highlight display manner or displaying the target control in a coloring manner.

5. A device for identifying a java window control, comprising:
an attribute acquisition module (201) configured to acquire attribute information of all controls in a current java window, wherein the attribute information of the controls comprises position information of all controls;
a position acquisition module (202) configured to acquire position information of current location; and
a location module (203) configured to determine a target control corresponding to the current location according to the position information of the current location and the position information of all controls,
wherein the attribute acquisition module comprises:
a first acquisition submodule configured to acquire draw primitives of all controls in the current java window from a current java process; and
a second acquisition submodule configured to acquire the attribute information of the controls from the draw primitives,
wherein the position acquisition module is further configured to:
acquire position information of a position where a current mouse cursor is located.

6. The device for identifying the java window control according to claim 5, wherein the device further comprises:
a reminding module configured to, after the location module determines the target control corresponding to the current location, display the target control in a reminding manner and display attribute information of the target control,
wherein the reminding module is further configured to:
display the target control in a highlight display manner or display the target control in a coloring manner.

7. A computer-readable storage medium, storing program instructions, which, when executed by a processor, implement the method according to any one of claims 1-4.

## Patentansprüche

1. Verfahren zur Identifikation einer Java-Fenster-Steuerung, umfassend:
Erfassen von Attributinformationen aller Steuerungen in einem aktuellen Java-Fenster (101), worin die Attributinformationen der Steuerungen Positionsinformationen aller Steuerungen umfassen;
Erfassen von Positionsinformationen eines aktuellen Standortes (102); und
Bestimmen einer Zielsteuerung, die dem aktuellen Standort entspricht, gemäß den Positionsinformationen des aktuellen Standortes und den Positionsinformationen aller Steuerungen (103),
worin der Schritt des Erfassens von Attributinformationen aller Steuerungen in einem aktuellen Java-Fenster umfasst:
Erfassen von Zeichnungsprimitiven aller Steuerungen in dem aktuellen Java-Fenster von einem aktuellen Java-Prozess; und
Erfassen der Attributinformationen der Steuerungen von den Zeichnungsprimitiven,
worin der Schritt des Erfassens von Positionsinformationen eines aktuellen Standortes umfasst:
Erfassen von Positionsinformationen einer Position, wo ein aktueller Mauscursor befindlich ist.

2. Verfahren zur Identifikation der Java-Fenster-Steuerung nach Anspruch 1, worin die Attributinformationen der Steuerungen ferner Typinformationen der Steuerungen umfassen.

3. Verfahren zur Identifikation der Java-Fenster-Steuerung nach Anspruch 1, worin der Schritt des Bestimmens einer Zielsteuerung des aktuellen Standortes gemäß den Positionsinformationen des aktuellen Standortes und den Positionsinformationen aller Steuerungen umfasst:
Vergleichen der Positionsinformationen des aktuellen Standortes mit den Positionsinformationen aller Steuerungen, und wenn die Positionsinformationen einer Steuerung die Positionsinformationen des aktuellen Standortes enthalten, Bestimmen der Steuerung als Zielsteuerung des aktuellen Standortes.

4. Verfahren zur Identifikation der Java-Fenster-Steuerung nach Anspruch 1, worin, nach dem Schritt des Bestimmens einer Zielsteuerung, die dem aktuellen Standort entspricht, das Verfahren ferner umfasst:
Anzeigen der Zielsteuerung in einer erinnernden Weise und Anzeigen von Attributinformationen der Zielsteuerung,
worin der Schritt des Anzeigens der Zielsteuerung in einer erinnernden Weise umfasst:
Anzeigen der Zielsteuerung in einer hervorhebenden Anzeigeweise oder Anzeigen der Zielsteuerung in einer färbenden Weise.

5. Vorrichtung zur Identifikation einer Java-Fenster-Steuerung, umfassend:
ein Attributerfassungsmodul (201), das dazu eingerichtet ist, Attributinformationen aller Steuerungen in einem aktuellen Java-Fenster zu erfassen, worin die Attributinformationen der Steuerungen Positionsinformationen aller Steuerungen umfassen;
ein Positionserfassungsmodul (202), das dazu eingerichtet ist, Positionsinformationen eines aktuellen Standortes zu erfassen; und
ein Standortmodul (203), das dazu eingerichtet ist, eine Zielsteuerung, die dem aktuellen Standort entspricht, gemäß den Positionsinformationen des aktuellen Standortes und den Positionsinformationen aller Steuerungen zu bestimmen,
worin das Attributerfassungsmodul umfasst:
ein erstes Erfassungsuntermodul, das dazu eingerichtet ist, Zeichnungsprimitiven aller Steuerungen in dem aktuellen Java-Fenster von einem aktuellen Java-Prozess zu erfassen; und
ein zweites Erfassungsuntermodul, das dazu eingerichtet ist, die Attributinformationen der Steuerungen von den Zeichnungsprimitiven zu erfassen,
worin das Positionserfassungsmodul ferner dazu eingerichtet ist:
Positionsinformationen einer Position zu erfassen, wo ein aktueller Mauscursor befindlich ist.

6. Vorrichtung zur Identifikation der Java-Fenster-Steuerung nach Anspruch 5, worin die Vorrichtung ferner umfasst:
ein Erinnerungsmodul, das dazu eingerichtet ist, nachdem das Standortmodul die Zielsteuerung bestimmt hat, die dem aktuellen Standort entspricht, die Zielsteuerung in einer erinnernden Weise anzuzeigen und Attributinformationen der Zielsteuerung anzuzeigen,
worin das Erinnerungsmodul ferner dazu eingerichtet ist:
die Zielsteuerung in einer hervorhebenden Anzeigeweise anzuzeigen oder die Zielsteuerung in einer färbenden Weise anzuzeigen.

7. Computerlesbares Speichermedium, das Programmanweisungen speichert, welche, wenn sie von einem Prozessor ausgeführt werden, das Verfahren nach einem der Ansprüche 1-4 implementieren.

## Revendications

1. Procédé d'identification d'une commande de fenêtre java, comprenant :
l'acquisition des informations d'attribut de toutes les commandes dans une fenêtre java actuelle (101), où les informations d'attribut des commandes comprennent des informations de position de toutes les commandes ;
l'acquisition des informations de position de l'emplacement actuel (102) ; et
la détermination d'une commande cible correspondant à l'emplacement actuel selon des informations de position de l'emplacement actuel et des informations de position de toutes les commandes (103),
où l'étape d'acquisition d'informations d'attribut de toutes les commandes dans une fenêtre java actuelle comprend :
l'acquisition des primitives de tirage de toutes les commandes dans la fenêtre java actuelle à partir d'un processus java actuel ; et
l'acquisition des informations d'attribut des commandes à partir des primitives de tirage,
où l'étape d'acquisition d'informations de position de l'emplacement actuel comprend :
l'acquisition des informations de position d'une position où se trouve un curseur de souris actuel.

2. Procédé d'identification de la commande de fenêtre java selon la revendication 1, où les informations d'attribut des commandes comprennent en outre des informations de type des commandes.

3. Procédé d'identification de la commande de fenêtre java selon la revendication 1, où l'étape de détermination d'une commande cible de l'emplacement actuel selon les informations de position de l'emplacement actuel et les informations de position de toutes les commandes comprend :
la correspondance des informations de position de l'emplacement actuel avec les informations de position de toutes les commandes, et lorsque les informations de position d'une commande contiennent les informations de position de l'emplacement actuel, la détermination de la commande en tant que commande cible de l'emplacement actuel.

4. Procédé d'identification de la commande de fenêtre java selon la revendication 1, où, après l'étape de détermination d'une commande cible correspondant à l'emplacement actuel, le procédé comprend en outre :
l'affichage de la commande cible comme rappel et l'affichage des informations d'attribut de la commande cible,
où l'étape d'affichage de la commande cible comme rappel comprend : l'affichage de la commande cible en surbrillance ou l'affichage de la commande cible en couleur.

5. Dispositif pour identifier une commande de fenêtre java, comprenant :
un module d'acquisition d'attribut (201) configuré pour acquérir des informations d'attribut de toutes les commandes dans une fenêtre java actuelle, où les informations d'attribut des commandes comprennent des informations de position de toutes les commandes ;
un module d'acquisition de position (202) configuré pour acquérir des informations de position de l'emplacement actuel ; et
un module d'emplacement (203) configuré pour déterminer une commande cible correspondant à l'emplacement actuel selon les informations de position de l'emplacement actuel et les informations de position de toutes les commandes,
où le module d'acquisition d'attribut comprend :
un premier sous-module d'acquisition configuré pour acquérir des primitives de tirage de toutes les commandes dans la fenêtre java actuelle à partir d'un processus java actuel ; et
un second sous-module d'acquisition configuré pour acquérir les informations d'attribut des commandes à partir des primitives de tirage,
où le module d'acquisition de position est en outre configuré pour :
acquérir des informations de position d'une position où se trouve un curseur de souris actuel.

6. Dispositif pour identifier la commande de fenêtre java selon la revendication 5, où le dispositif comprend en outre :
un module de rappel configuré pour, après que le module d'emplacement a déterminé la commande cible correspondant à l'emplacement actuel, afficher la commande cible comme rappel et afficher des informations d'attribut de la commande cible,
où le module de rappel est en outre configuré pour :
afficher la commande cible en surbrillance ou afficher la commande cible en couleur.

7. Support de stockage lisible par ordinateur, stockant des instructions de programme, qui, lorsqu'elles sont exécutées par un processeur, mettent en œuvre le procédé selon l'une quelconque des revendications 1 à 4.
